# EUROPÄISCHE PATENTANMELDUNG

(11) **EP 1 970 145 A2**
(43) Veröffentlichungstag der Anmeldung: **17.09.2008**
(21) Anmeldenummer: 08102160.2
(22) Anmeldetag: 29.02.2008
(51) Int. Cl.: B22D 17/14, B29C 33/10

(54) **Verfahren zur Entlüftung von Formen**

(30) Priorität: 13.03.2007 DE 102007012577
(71) Anmelder: Bühler Druckguss AG, 9240 Uzwil (CH)
(72) Erfinder: Jordi, Ueli, 9244, Niederuzwil (CH)
(74) Vertreter: Frommhold, Joachim

(57) **Zusammenfassung**

Die Erfindung betrifft ein Verfahren zur Entlüftung von Formen bzw. Vakuumierung von Formen, insbesondere von Giessformen an Druckgiessmaschinen, dass eine vereinfachte Formentlüftung ohne mechanisch bewegte Teile an einer Druckgiessform ermöglichen soll.

Hierzu werden abzuleitende Gase (2) mittels eines separaten Druckluftstromes abgeführt.

## Beschreibung

Die Erfindung betrifft ein Verfahren zur Entlüftung von Formen bzw. Vakuumierung von Formen, insbesondere von Giessformen an Druckgiessmaschinen.

Es ist bekannt, schmelzflüssiges Metall mittels Unterdruck in eine Giesskammer zu saugen. Die DE-A-4239558 offenbart dabei ein Verfahren zur Evakuation von Luft mittels einer kontinuierlichen Regelung des Vakuums über die Dauer der Beaufschlagung mit Unterdruck in der Giesskammer bzw. in der Giessform. Hierzu ist wenigstens ein Regelventil vorgesehen um den Unterdruck in wenigstens zwei Zeitabschnitten zu regeln.

Nach der EP-A-441289 werden Gase vor dem Eintritt von Schmelze in den Formhohlraum bei geschlossener Form durch einen Entgasungskanal abgeleitet um ein Eindringen der Gase mit der Schmelze in den Formhohlraum zu verhindern.

Gemäss DE-C-3834777 ist bei einer Gasentlüftungseinrichtung einer Druckgiessmaschine ein Detektionselement vorgesehen, welches eingegossenes Metall erkennt und ein Signal erzeugt.

Ein weiteres Entlüftungsventil ist in der DE-A-19951858 beschrieben, bei dem eine Form in der Formtrennebene einen Entlüftungskanal aufweist, in dessen Verlängerung austrittsseitig eine Sperre für Schmelze in Form eines Zyklons angeordnet ist.

In der WO-A-00/59658 ist ein Verfahren zum Vakuum-Druckgiessen offenbart, bei dem Evakuation und Füllung der Form voneinander getrennt sind. Hierzu wird der zu füllende Formhohlraum erst freigegeben, wenn er entlüftet ist und die Giesskammer bis zu diesem Zeitpunkt geschlossen ist und mit Metallschmelze vorgefüllt wird. Eine stirnseitige Öffnung der Giesskammer zur Form, die dem Giesskolben gegenüber liegt, ist durch ein Ventil verschliessbar.

Der Erfindung liegt die Aufgabe zugrunde ein Verfahren zur Entlüftung von Formen zu entwickeln, das eine vereinfachte Formentlüftung ohne mechanisch bewegte Teile an einer Druckgiessform ermöglicht. Die Aufgabe ist mit den Merkmalen des Patentanspruchs 1 gelöst.

Aus der Form abzuführende Gase werden mittels eines separaten Druckluftstromes mitgerissen, so dass weder Vakuumpumpen noch ein Vakuumtank erforderlich sind.

Die Form wird in einfacher Weise vakuumiert und eine Vakuumerzeugung on demand ist möglich. Die abgeführten Gase werden direkt nach aussen geführt, wodurch Vakuumleitungen und Filter entfallen können.

Vorteilhafte Ausführungsformen sind in den Unteransprüchen offenbart. So kann eine ein- oder zweistufige Vakuumierung erfolgen und/oder mittels einer Regelung des Druckluftstromes kann das Vakuum den Prozessbedürfnissen angepasst werden.
Eine weitere Aufgabe der Erfindung besteht in der Schaffung einer Vorrichtung zur Entlüftung von Formen, insbesondere von Druckgiessformen. Diese Aufgabe ist mit den Merkmalen des Patentanspruchs 4 dadurch gelöst, dass ein Entlüftungskanal der Form austrittsseitig in einem Vakuumgenerator in Form einer Venturidüse endet.

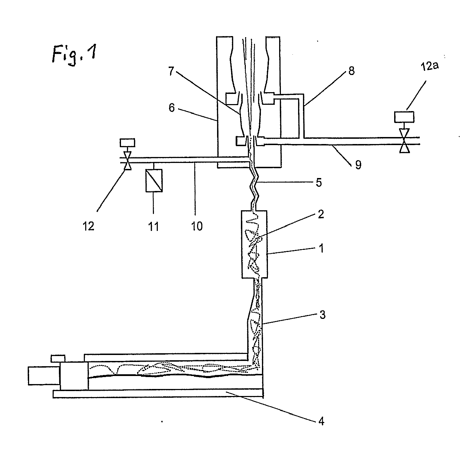

Die Erfindung wird nachfolgend in einem Ausführungsbeispiel anhand einer Zeichnung näher beschrieben. In der Zeichnung zeigen die
- Fig. 1, 1a:: eine erfindungsgemässe Formentlüftung
- Fig. 2:: einen Weg-Druckverlauf beim Druckgiessen
- Fig. 3, 3a:: einen Chillblock und Giesskanal.

Ein Formhohlraum 1 einer Druckgiessform ist über einen Angusskanal 3 mit einer Giesskammer 4 einer Druckgiessmaschine verbunden. Vom Formhohlraum 1 führt ein Entlüftungskanal 5 für Gase 2 nach aussen. Der Entlüftungskanal 5 endet in einem Vakuumgenerator 6, dessen Innenform als Venturidüse 7 ausgebildet ist. Etwa senkrecht zum Ende des Entlüftungskanales 5 ist reicht eine Druckluftzuführung 9 in die Venturidüse 7. Ein Bypass 8 unter Umgehung der Venturidüse ist vorgesehen. Zusätzlich mündet vor dem austrittsseitigen Ende des Entlüftungskanales 5 eine Spülleitung 10 in diesen. Die Spülleitung 10 ist mit einer Vakuumüberwachungseinrichtung 11 und einem Spülventil 12 versehen.

Mit dem Sprühventil 12 kann nahe am Formhohlraum 1 liegende Messleitung (Spülleitung 10) und der Entlüftungskanal 5 ausgeblasen werden.

Sowohl mit diesem als auch mittels einer Regulierung der Druckluftzufuhr (Drucklufteinlassventil 12a) in Venturidüse 7 und Bypass 8 kann der Vakuumdruck im Formhohlraum 1 geregelt werden.

Der Vakuumgenerator kann auch zweischalig ausgeführt sein, damit er besser gereinigt werden kann.

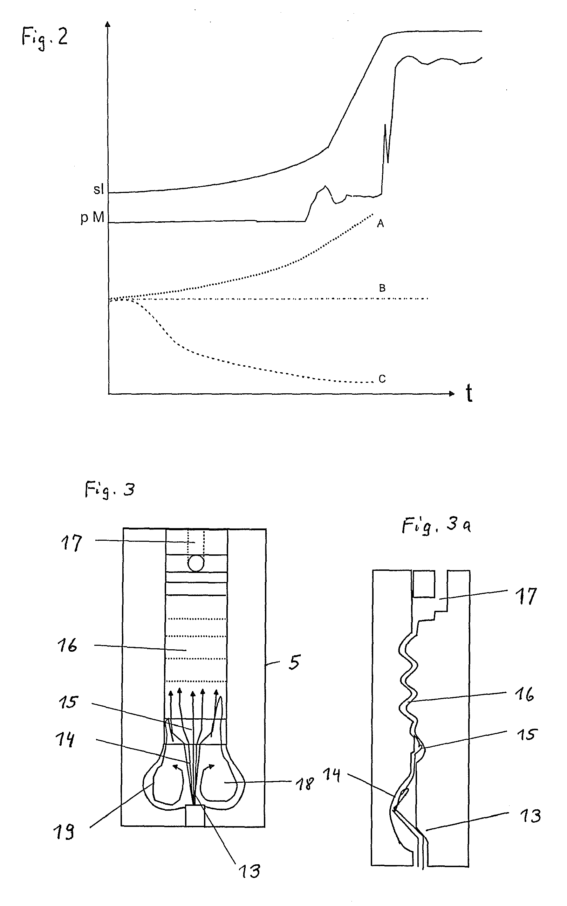

Der Weg-Druckverlauf beim Giessen stellt sich im Beispiel gemäss Fig. 2 dar.

Mit der Vakuumüberwachungseinrichtung 11 wird die Druckflanke im Gasdruck/Zeitdiagramm C in Abhängigkeit des Giesskolbenweg /Zeitdiagramms von der Druckgussmaschinensteuerung überwacht.

Dadurch kann ein Fehler im Vakuumsystem oder eine Undichtheit der Druckgussform frühzeitig erkannt werden. Die Maschine ist dadurch in der Lage das Bedienpersonal zu alarmieren, oder die fehlerhaften Teile auszusortieren.

Durch ein Wannenförmiges Strömungsprofil 13 im Einlaufbereich wird der Metallstrom abgebremst und aufgefächert. Der Strömungsverteiler 15 verteilt die Strömung gleichmässig auf die Kühlstrecke 16. Ein Strömungverteiler15 verteilt die Strömung gleichmässig auf die Kühlstrecke 16. Im Bereich 18, 19 bildet Sich ein Holraum, wenn die Schmelze in der Kühlstrecke 16 abkühlt wird und die Viskosität steigt, wird der Bereich 18, 19 gefüllt. Das hat zur folge, dass der Schmelzestrom für kurze Zeit an Geschwindigkeit verliert, aber noch nicht druckbeaufschlagt ist. In dieser Zeit kann die Schmelze in der Kühlstrecke 16 erstarren, und einen sicheren Abschluss des Entlüftungskanals 5 bilden.

Der Formgas-Restdruck gelangt über den Überlauf 20, die Kühlstrecke 21 und den Gasmesskanal 22 zur Gasdrucküberwachungseinrichtung 23. Der Formgas-Restdruck gibt Auskunft über die Qualität des Gussstückes und kann an der Druckgussmaschine ausgewertet werden.

Der Gasdruck kann ohne mechanisch bewegte Teile in einer Druckgussform vom hohen Druck der Schmelze getrennt werden.

Möglich ist eine Formgas-Restdruckmessung, wobei der Formgas-Restdruck über den Überlauf 20 und die Kühlstrecke 21 und den Gasmesskanal 22 zur Gasdrucküberwachungseinrichtung 23 gelangt. Der Gasrestdruck gibt Auskunft über die Qualität der Gussstückes und kann von der Druckgiessmaschine ausgewertet werden.

### Bezugszeichen

| | | | |
|---|---|---|---|
| 1 | Formhohlraum | 16 | Kühlstrecke |
| 2 | Gas | 17 | Gasaustritt / Vakuumsauganschluss |
| 3 | Angusskanal | 18 | Bereich (Wirbelbereich) |
| 4 | Giesskammer | 19 | Bereich (Wirbelbereich) |
| 5 | Entlüftungskanal | 20 | Überlauf |
| 6 | Vakuumgenerator | 21 | Kühlstrecke |
| 7 | Venturidüse | 22 | Gasmesskanal |
| 8 | Bypass | 23 | Gasdruckmesseinrichtung |
| 9 | Druckluftzuführung | | |
| 10 | Spülleitung | sl | Giesskolben Weg /Zeitdiagram |
| 11 | Vakuumüberwachungseinrichtung | pM | Druck/Zeitdiagram der Schmelze in der Form |
| 12 | Spülventil | A | Gasdruck/Zeitdiagram in der Giessform **ohne** Vakuumierung |
| 12a | Drucklufteinlassventil | B | Atmosphärischer Druck/Zeitdiagram |
| 13 | Gas- und Schmelzmetalleintritt in den Chillblock | C | Gasdruck/Zeitdiagram in der Druckgussform **mit** Vakuumierung |
| 14 | wannenförmige Aufprallfläche | | |
| 15 | Strömungsverteiler | | |

## Patentansprüche

1. Verfahren zur Entlüftung von Formen, insbesondere von Giessformen an Druckgiessmaschinen durch ableiten von Gasen aus einem Formhohlraum vor oder während einer Befüllung des Formhohlraumes mit Metallschmelze, **dadurch gekennzeichnet, dass** abzuleitende Gase (2) mittels eines separaten Druckluftstromes abgeführt werden.

2. Verfahren nach Anspruch 1, **dadurch gekennzeichnet, dass** der Druckluftstrom und damit eine Vakuumierung geregelt wird.

3. Verfahren nach Anspruch 1 oder 2, **dadurch gekennzeichnet, dass** das abzuleitende Gas (2) im Druckluftstrom beschleunigt wird und somit ein Unterdruck im Formhohlraum (1) erzeugt wird.

4. Verfahren nach mindestens einem der Ansprüche 1 bis 3, **dadurch gekennzeichnet, dass** eine Druckabfallflanke in Abhängigkeit des Giesskolbenweges analysiert wird.

5. Vorrichtung zur Entlüftung von Formen, insbesondere von Giessformen an Druckgiessmaschinen, wobei ein Formhohlraum (1) über einen Angusskanal (3) mit einer Giesskammer (4) der Druckgiessmaschine verbunden ist und weiterhin mit einem Entlüftungskanal (5) versehen ist, **dadurch gekennzeichnet, dass** der Entlüftungskanal (5) am austrittsseitigen Ende von einem Vakuumgenerator (6) umgeben ist, dessen innere Form als Venturidüse (7) ausgestaltet ist.

6. Vorrichtung nach Anspruch 5, **dadurch gekennzeichnet, dass** der Vakuumgenerator (6) mindestens einstufig ausgebildet ist.

7. Vorrichtung nach Anspruch 5 oder 6, **dadurch gekennzeichnet, dass** der Entlüftungskanal (5) eine wannenförmige Aufprallfläche (13) aufweist.

8. Verwendung einer Vorrichtung nach den Ansprüchen 5 bis 7, **dadurch gekennzeichnet, dass** ein Gasdruck ohne mechanisch bewegte Teile in einer Druckgiessform vom hohen Druck der Schmelze getrennt wird.
